# EUROPEAN PATENT APPLICATION

(11) **EP 1 145 626 A2**
(43) Date of publication of application: **17.10.2001**
(21) Application number: 01201339.7
(22) Date of filing: 11.04.2001
(51) Int. Cl.: A01K 1/12, A01K 11/00, A01J 5/017

(54) **Method and device for milking cattle**

(30) Priority: 11.04.2000 NL 1014908
(71) Applicant: Idento Electronics B.V., 8307 AA Ens (NL)
(72) Inventor: VAN DER LINGEN, Daniel Daan, 8061 Hasselt (NL); VAN DER SLUIS, Peter, 8271 PP Ijsselmuiden (NL); GANZEBOER, Theo, 7711 BN Nieuwleusen (NL)
(74) Representative: Grootscholten, Johannes Antonius Maria

(57) **Abstract**

The present invention relates to a method for milking animals, such as cows, with a milking robot, comprising of: providing a livestock animal with access to a milking box; and milking the animal, further comprising of: dimensioning the milking box prior to milking in at least length direction in accordance with the dimensions of the animal. The invention also relates to an apparatus for milking animals, such as cows, comprising: milking box with an entrance; and a milking installation comprising a milking robot for milking a livestock animal, further comprising: means for dimensioning the milking box prior to milking in at least length direction in accordance with the dimensions of the animal.

## Description

The present invention relates to a method and an apparatus for milking animals, wherein a milking robot is applied in the method for the milking, and the method and the apparatus respectively comprise of: providing a livestock animal with access to a milking box and milking the animal; and a milking box with an entrance, and a milking installation comprising a milking robot for milking a livestock animal.

Such methods and apparatus are generally known, wherein the milking boxes form a stationary, constant entity, wherein no distinction is made between the dimensions of the individual animals of the livestock for milking.

The known methods and apparatus have the drawback that, although the milking robots used herein comprise means for determining the position of teats on an udder of a relevant animal, such means must determine this position in such a large search range associated with the diversity of dimensions of the animals for milking that this step is time-consuming and often results in error messages. A farmer or other user must then still take action, which defeats the object of the milking robots in milking the animals, i.e. automation of the milking without the intervention of the farmer or other user.

The present invention has for its object to obviate the above stated drawbacks of the known art, for which purpose a method and an apparatus are provided which are respectively distinguished by dimensioning the milking box prior to milking in at least length direction in accordance with the dimensions of the animal; and means for dimensioning the milking box prior to milking in at least length direction in accordance with the dimensions of the animal. A milking box is thus adapted according to the present invention to the actual dimensions of a relevant animal for milking, so that the position of the udder, and more particularly the teats thereon, are determined more accurately. The search range for the milking robot is reduced and the effectiveness of the milking with a milking robot is thus increased.

In a favourable embodiment the method has the feature of dimensioning the milking box prior to providing access thereto, and the apparatus comprises the feature of means for dimensioning the milking box prior to providing access thereto. Such an embodiment of the invention is advantageous because animals for milking can become unsettled or even panicky if the dimensions of the milking box are adapted when the animal is already standing in the milking box. By having the adjustment of the dimensions take place beforehand, such unrest among the relevant animals is prevented.

In another embodiment the method comprises of detecting the identity of a relevant animal in the vicinity of an entrance to the milking box and dimensioning the milking box in accordance with predetermined data relating to the dimensions of the animal, and the apparatus comprises a detector for detecting the identity of a relevant animal in the vicinity of an entrance to the milking box and means for dimensioning the milking box in accordance with predetermined data relating to the dimensions of the animal. Use is thus advantageously made of existing detectors which determine the identity of a relevant animal prior to milking thereof in respect of monitoring the milk delivery, the health of the animal, the frequency with which the animal is milked and so on. The data relating to the dimensions of the animal can be stored in a memory in a central control, which is also used to manage inter alia the other above stated parameters in the milking system.

In such an embodiment the method can further comprise of modifying the predetermined data on the basis of observation relating to the accuracy of the dimensioning, and the apparatus can comprise means for modifying the predetermined data and means connected thereto for observing the accuracy of the dimensioning. Account can hereby be taken of the growth of the animals and/or other factors of importance in adjusting the dimensions of the milking box. Individual livestock animals will thus have a preference for slightly more or slightly less space at the front or rear, and these individual preferences of the different animals can be taken into account.

According to a further aspect of the invention, in the method the dimensioning of the milking box comprises of displacing a boundary located on the front end of the milking box in length direction of the milking box, and in the apparatus the means for dimensioning the milking box comprise means for displacing a boundary located on a front end of the milking box in length direction of the milking box. By having the variation in the dimensioning take place on the front end, the search range for the milking robot close to the rear end of the animal is limited still further, which results in even shorter search times and even more certainty in the arranging of the teat cups.

In the apparatus according to the present invention the means for displacing the boundary between the boundary and the other parts of the milking box can comprise a drive and a guide for guiding the displacement of the boundary. The drive can hereby be held out of the reach of the animals, for instance close to the top side of the milking box, while the guide ensures a certain displacement of the boundary in length direction of the milking box, while the guide is less susceptible to interference by the animals, so that an even displacement is achieved with a guide which is relatively easy to embody and an easy, simple drive.

The above mentioned and other features, advantages and aspects of the present invention will be described hereinbelow in more detail with reference to the annexed drawing of a number of embodiments for implementing the method and the apparatus according to the present invention, whereby identical or similar parts and components are designated with the same reference numerals, and in which:
fig. 1 shows a schematic top view of a milking parlour with milking boxes according to the present invention;
fig. 2 shows a perspective view of a milking box in accordance with and for implementation of the method of the present invention; and
fig. 3 is a schematic representation of an alternative embodiment of a milking box as embodiment of an apparatus and for implementing a method according to the present invention.

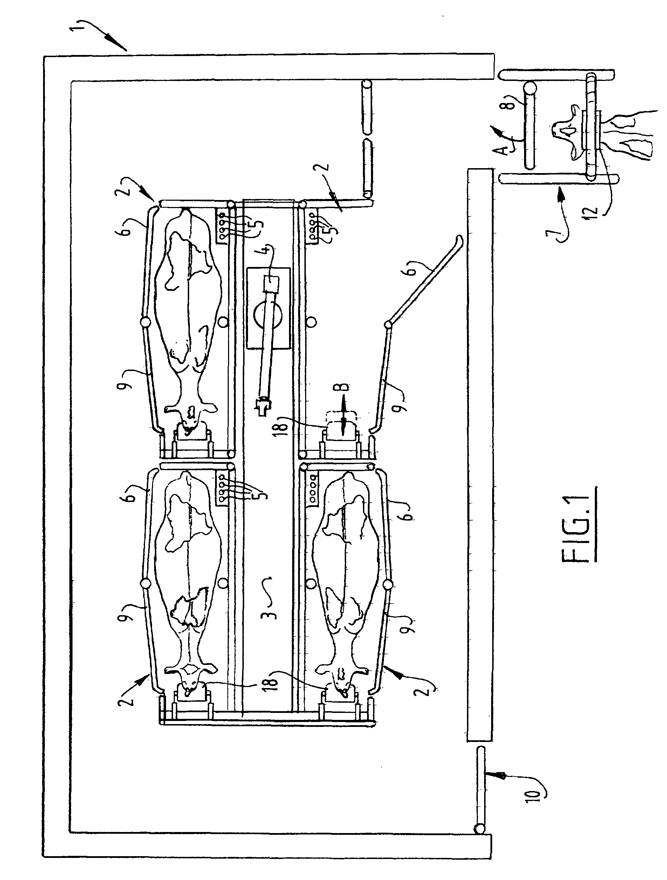

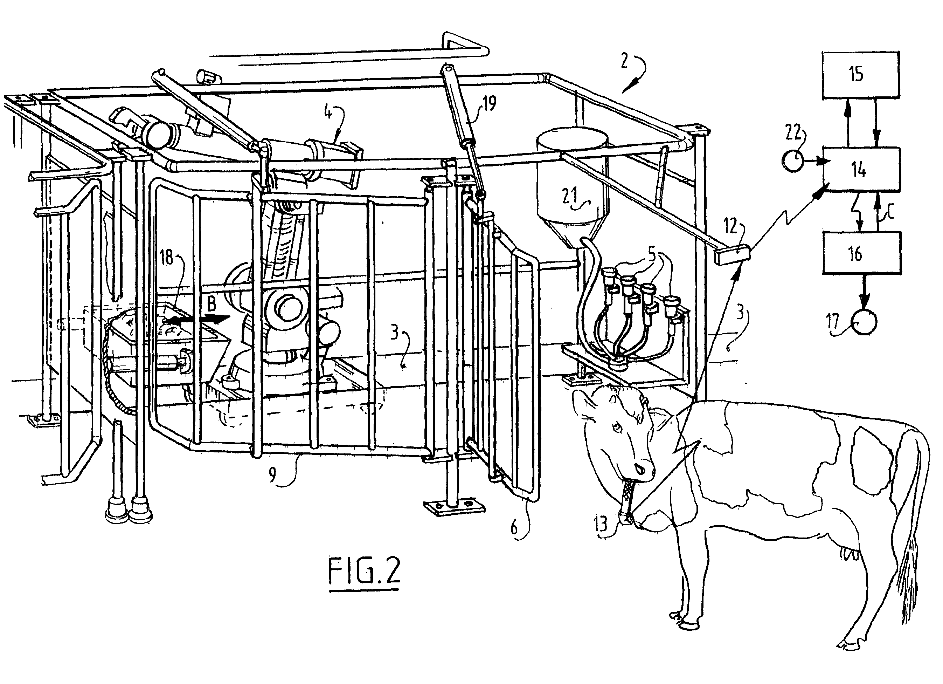

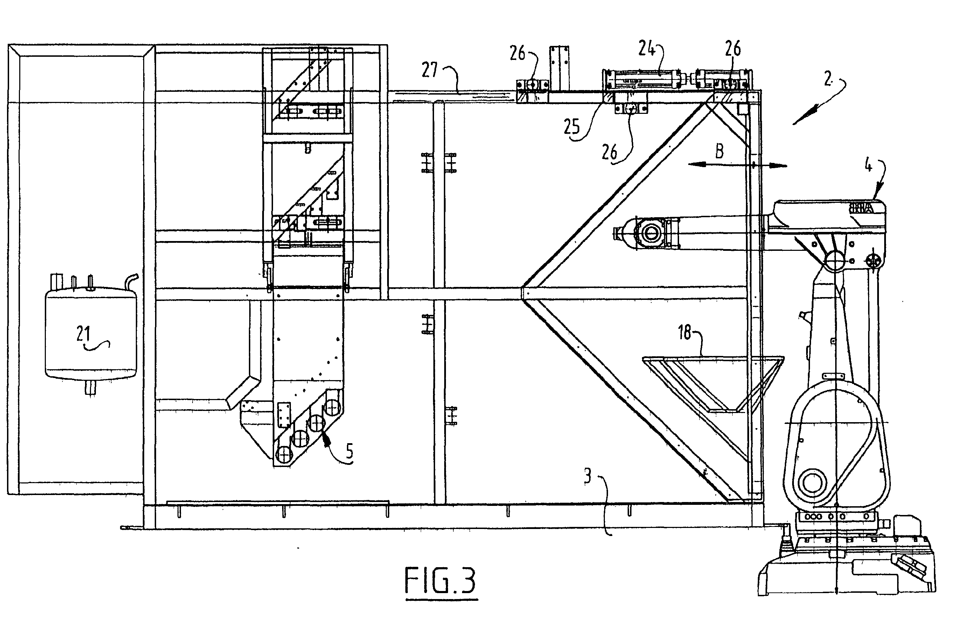

Fig. 1 shows a milking parlour 1 in which are erected four milking boxes 2. Possible embodiments of milking boxes 2 as embodiments of the apparatus and for implementing the method according to the present invention are shown in figures 2 and 3.

Situated between milking boxes 2 is a passageway 3 for a milking robot 4. This latter is displaceable in passageway 3 for arranging teat cups 5 disposed at milking boxes 2 in order to milk the animals. Each of the milking boxes 2 has an entrance 6 through which the livestock animals are provided with access to the individual milking boxes 2. Each of the milking boxes 2 otherwise comprises a fence which is closed to all sides and on the side of milking robot 4 provides an opening for arranging teat cups 5.

Milking parlour 1 further comprises a central access 7 through which one livestock animal for milking is allowed through at a time by opening a door 8 in the direction of arrow A when there is a place for an animal for milking in one of the milking boxes 6.

After milking of one animal has been completed, an exit 9 of a relevant milking box 2 is opened to release the animal, so that the animal in question can leave through a central exit 10 of milking parlour 1.

Owing to the design of entrances 6 and exits 9 of the individual milking boxes an animal for milking is guided in each case to precisely that milking box 2 which has become available after completion of the milking of a previous animal. Further arranged for this purpose in the configuration of fig. 1 is a selection door 11 which determines whether an animal entering through the central entrance 7 is guided to one of the upper two milking boxes 2 or one of the lower two milking boxes 2.

Fig. 2 shows in perspective view and in more detail a possible embodiment of one of the milking boxes 2 of fig. 1.

Milking box 2 comprises a fence with entrance 6 and exit 9. Suspended at the entrance 6 of milking box 2 in the embodiment shown here is a sensor 12 which is sensitive to a transponder 13 which is hung for instance round the neck of a cow so as to determine the identity of the cow in question. An identification signal coming from sensor 12 is sent to a control 14, which is provided with a memory 15 in which predetermined data is stored which relates to the dimensions of the relevant animal and which can be retrieved therefrom by control 14, this being indicated by the double arrow between control 14 and memory 15. On the basis of this data a drive 16 is controlled by control 14 to adjust the milking box 2 in length direction thereof in accordance with the dimensions of the relevant animal, wherein drive 16 is connected to cylinders 17 which are arranged on the fence of milking box 2 and from which the feed trough 18 is suspended. Feed trough 18 is thus displaceable reciprocally in the direction of the double arrow B so as to adjust the space available for the animal, particularly in length direction of milking box 2.

Once the length available for the animal in milking box 2 has been adjusted, the entrance 6 is opened with cylinder 19 and the animal can enter milking box 2.

After milking has been completed the exit 9 is opened with cylinder 20, so that the animal can once again leave the milking box 2.

The space available for the animal in length direction of the milking box is determined with feed trough 18 before the animal enters milking box 2. The animal for milking is not therefore exposed to the possible unsettling which could occur if the length of milking box 2 were only to be adjusted once the animal had already taken up position therein. Once the animal has entered milking box 2 the milking robot 4 enters into operation, collects teat cups 5 which are connected to a collector 21 and arranges these teat cups 5 to initiate milking. The length of milking box 2 is adjusted on the side of the feed trough, and therefore on the front end of milking box 2, so that the rear end of the animal acquires a well defined position and whereby the search range for milking robot 4 is considerably reduced, thus increasing the speed with which teat cups 5 can be arranged.

The predetermined data in memory 15 relating to the dimensions in length direction of the cow (or other animal for milking) may be subject to change, for instance when the animal is still growing. It may therefore be important to modify the predetermined data in memory 15 on the basis of observations relating to the accuracy of the dimensioning. If an animal for milking becomes particularly agitated in milking box 2, which is unfavourable for the milk production, the animal will exert force on feed trough 18. This can be observed by drive 16, which can provide information hereon to control 14, this being indicated with arrow C, in order to modify the predetermined data in memory 15, for instance an increase in the dimensions of the animal in length direction of milking box 2. Other aspects may also play a part here, such as the time period required for arranging teat cups; the accuracy of the arrangement of teat cups; the resistance offered by the relevant animal to dimensioning of the milking box when the animal has taken up position in milking box 2 prior to the dimensions thereof being adapted to the animal; the resistance offered by the relevant animal to entering the milking box after dimensioning thereof; fodder take-up during milking; and the milk yield. Such factors are observed in respect of for instance the milk yield with a schematically shown sensor 22 which is for instance connected to the milking system of which collector 21 and teat cups 5 also form part.

The modified data is stored in memory 15 so that the next time a relevant animal is milked use is made of the modified data as the predetermined data relating to the dimensions of the animal for the purpose of dimensioning the milking box 2 in accordance therewith.

Fig. 3 shows an alternative embodiment of a milking box for implementing the apparatus and the method according to the present invention, which could also be applied as milking box 2 in fig. 1. Feed trough 18 is herein arranged fixedly on fence partition 23 which is reciprocally displaceable in the direction of double arrow B under the action of a cylinder 24 which could be connected to a drive 16 as shown in fig. 2.

Cylinder 24 is arranged in fig. 3 on the top of milking box 2 out of reach of the animals for milking. So as to prevent fence partition 23 being pulled askew, connections 25 are arranged on fence partition 23 which extend along an upper girder designed as a tube 27. Mounted on connections 25 are roller wheels 26 which engage on tube 27 at mutual distances. Vertical movement of partition 23 is thus prevented, while fence partition 23 is guided effectively in horizontal direction along tube 27 under the controlling drive of cylinder 24 for reciprocal movement in the direction of arrow B in order to dimension the milking box. In contrast to fig. 2, not only feed trough 18 but the whole fence partition 23 on which feed trough 18 is arranged can be deemed as boundary in the sense of the present invention.

It is in principle not important in the present invention whether the dimensioning of the milking box takes place before or after an animal for milking has taken up position therein, but it is recommended to have this dimensioning take place before the animal enters the milking box. Unnecessary agitation of the animal prior to milking is thus prevented, as this could have an adverse effect on the milk yield. The detection of the identity of the animal in question at the entrance to the milking box is however important, since the milking box must be preadjusted to the dimensions hereof. Modifying of the predetermined data on the basis of observation relating to the accuracy of the dimensioning can include many other aspects than those stated above. The sensor designated schematically in fig. 2 must therefore serve to collect all possible relevant data, including an individual preference of a relevant animal for milking, which can contribute to the comfort of the animal during milking. The production is hereby increased and the progress of the animals for milking to the milking boxes is facilitated.

It will be apparent that many alternatives and additional embodiments will occur to the skilled person after examination of the foregoing. It is thus possible to adjust the dimensioning of the milking box in diverse ways. As addition or alternative to the embodiments explicitly described above and shown in the drawing, it is also possible to adjust the width of the milking boxes etc. The industrial milking robot shown in the figures can be a conventional milking robot which is for instance disposed fixedly in the vicinity of the milking box and not, as shown in fig. 2, movable on wheels from milking box to milking box.

In view of the embodiments which are alternative and additional to those explicitly referred to above, it will be immediately apparent to a skilled person that the scope of protection of the present invention should be based solely on the appended claims and not on the explicitly described embodiments.

## Claims

1. Method for milking animals, such as cows, with a milking robot, comprising of: providing a livestock animal with access to a milking box; and milking the animal, further comprising of: dimensioning the milking box prior to milking in at least length direction in accordance with the dimensions of the animal.

2. Method as claimed in claim 1, comprising of:
dimensioning the milking box prior to providing access thereto.

3. Method as claimed in claim 1 or 2, comprising of detecting the identity of a relevant animal in the vicinity of an entrance to the milking box and dimensioning the milking box in accordance with predetermined data relating to the dimensions of the animal.

4. Method as claimed in claim 3, further comprising of modifying the predetermined data on the basis of observations relating to the accuracy of the dimensioning.

5. Method as claimed in claim 4, comprising of observing at least one aspect of the group comprising: the behaviour of a relevant animal in the milking box; the time period required for arranging teat cups; the accuracy of the arrangement of teat cups; the resistance offered by the relevant animal to dimensioning of the milking box; the resistance offered by the relevant animal to entering the milking box after dimensioning thereof as according to claim 2; fodder take-up during milking; and the milk yield.

6. Method as claimed in at least one of the foregoing claims, wherein the dimensioning of the milking box comprises of: displacing a boundary located on the front end of the milking box in length direction of the milking box.

7. Apparatus for milking animals, such as cows, comprising: milking box with an entrance; and a milking installation comprising a milking robot for milking a livestock animal, further comprising: means for dimensioning the milking box prior to milking in at least length direction in accordance with the dimensions of the animal.

8. Apparatus as claimed in claim 7, comprising:
means for dimensioning the milking box prior to providing access thereto.

9. Apparatus as claimed in claim 7 or 8, comprising a detector for detecting the identity of a relevant animal in the vicinity of an entrance to the milking box and means for dimensioning the milking box in accordance with predetermined data relating to the dimensions of the animal.

10. Apparatus as claimed in claim 9, further comprising means for modifying the predetermined data and means connected thereto for observing the accuracy of the dimensioning.

11. Apparatus as claimed in claim 10, comprising means for observing at least one aspect of the group comprising: the behaviour of a relevant animal in the milking box; the time period required for arranging teat cups; the accuracy of the arrangement of teat cups; the resistance offered by the relevant animal to dimensioning of the milking box; the resistance offered by the relevant animal to entering the milking box after dimensioning thereof as according to claim 8; fodder take-up during milking; and the milk yield.

12. Apparatus as claimed in at least one of the foregoing claims 7-11, wherein the means for dimensioning the milking box comprise: means for displacing a boundary located on a front end of the milking box in length direction of the milking box.

13. Apparatus as claimed in claim 12, wherein the means for displacing the boundary between the boundary and the other parts of the milking box comprise: a drive; and a guide for guiding the displacement of the boundary.

14. Milking parlour comprising at least one apparatus as claimed in at least one of the foregoing claims 7-13.
